# EUROPÄISCHE PATENTSCHRIFT

(11) **EP 2 248 242 B1**
(45) Veröffentlichungstag und Bekanntmachung des Hinweises auf die Patenterteilung: **04.04.2018**
(21) Anmeldenummer: 09714995.9
(22) Anmeldetag: 20.02.2009
(51) Int. Cl.: H02J 50/10, H02J 50/40, H01F 38/14

(54) **ANORDNUNG ZUM VERSORGEN ZUMINDEST EINES GERÄTES IN EINEM SCHALTSCHRANK, ODER EINEM INSTALLATIONSGEHÄUSE MIT HILFSENERGIE**
ARRANGEMENT FOR THE SUPPLY OF AT LEAST ONE DEVICE LOCATED IN A CONTROL PANEL OR INSTALLATION HOUSING WITH AUXILIARY POWER
DISPOSITIF D'ALIMENTATION EN ÉNERGIE AUXILIAIRE D'AU MOINS UN APPAREIL DANS UNE ARMOIRE DE COMMANDE OU UN BOÎTIER D'INSTALLATION

(30) Priorität: 29.02.2008 DE 102008011920
(43) Veröffentlichungstag der Anmeldung: 10.11.2010
(73) Patentinhaber: Eaton Electrical IP GmbH & Co. KG, 12529 Schönefeld (DE)
(72) Erfinder: GAUXMANN, Berthold, 53225 Bonn (DE)
(74) Vertreter: Leadbetter, Benedict
(86) Internationale Anmeldenummer: PCT/EP2009/001219
(87) Internationale Veröffentlichungsnummer: WO 2009/106266

(56) Entgegenhaltungen:
- DE-B4- 19 882 578
- US-A1- 2002 021 226

## Beschreibung

Die Erfindung betrifft eine Anordnung zum Versorgen zumindest eines Gerätes in einem Schaltschrank oder einem Installationsgehäuse mit Hilfsenergie, wobei zumindest eine mit einer Versorgungsspannung versorgbare oder versorgte Sendespule zum Aussenden von Hilfsenergie und zumindest eine Empfangsspule zum Empfangen der Hilfsenergie vorgesehen und die zumindest eine Sendespule in oder an dem Schaltschrank oder dem Installationsgehäuse angeordnet ist.

Viele in Schaltschränken, elektrischen Verteilereinheiten und Installationsgehäusen vorhandene bzw. eingesetzte Geräte benötigen eine Hilfsenergie, mit der sie betrieben werden. Häufig ist das Bereitstellen einer solchen Hilfsenergie mit großem Aufwand verbunden, da entweder Anschlussklemmen für das Anschließen der Geräte an die in dem Schaltschrank vorhandene Stromversorgung vorgesehen und angeschlossen oder andere Energiequellen genutzt werden müssen. Eine gebräuchliche Energiequelle ist z.B. die Nutzung der Energie von Stromwandlern.

Diese üblichen Vorgehensweisen zum Bereitstellen von Hilfsenergie für die Geräte bedeuten einen großen Aufwand für Verdrahtungen zu den Geräten und beispielsweise Anschlussklemmen für diese. Ferner sind solche Maßnahmen, insbesondere bei Nutzung anderer Energiequellen, natürlich mit erheblichen Kosten verbunden, die nicht nur die erforderlichen Verdrahtungen, sondern auch das Bereitstellen von weiteren elektronischen Komponenten z.B. für die Nutzung der Energie von Stromwandlern beinhaltet.

Grundsätzlich ist die drahtlose Versorgung von insbesondere Aktuatoren und Sensoren im Stand der Technik bereits bekannt. Beispielsweise beschreibt die US 6,597,076 B2 ein System zum drahtlosen Versorgen einer großen Anzahl von

Aktuatoren einer Maschine mit elektrischer Energie. Hierbei ist zumindest eine Primärwindung vorgesehen, die von einem Mittelfrequenzoszillator gespeist wird. Jeder Aktuator weist ferner zumindest eine Sekundärwindung auf, die dazu geeignet ist, Energie aus dem Mittelfrequenzmagnetfeld, das durch die erste Windung erzeugt wird, herauszuziehen. Das System umfasst ein Gerät mit einer großen Anzahl von Aktuatoren, den einen Mittelfrequenzoszillator, einen Steuerprozessor für das Gerät, eine zentrale Übertragungseinrichtung zum Übertragen von Funksignalen, wobei die Übertragungseinrichtung mit dem Computer verbunden ist, und zumindest eine Primärwindung zum Erzeugen eines Mittelfrequenzmagnetfeldes zum Versorgen der Aktuatoren mit elektrischer Energie ohne die Verwendung von Verkabelungen. Jeder Aktuator weist eine Vielzahl von orthogonalen Sekundärwindungen auf und ist mit einer Empfangseinrichtung zum Empfang der Funksignale von der zentralen Übertragungseinrichtung versehen. Der die Primärspule speisende Oszillator stellt eine Schwingung mittlerer Frequenz zwischen etwa 15 kHz und 15 MHz zur Verfügung. Die Primärspirale wirkt dabei nicht als Antenne, sondern sendet elektromagnetische Strahlung aus.

Die DE 199 26 562 A1 offenbart ein Verfahren und eine Anordnung zur drahtlosen Versorgung einer Vielzahl von Aktuatoren mit elektrischer Energie, wobei ein von zumindest einer Primärwicklung abgestrahltes mittelfrequentes magnetisches Feld zu jedem mindestens eine Sekundärwicklung aufweisenden Aktuator übertragen und dort in elektrische Energie umgewandelt wird. Die Vorgehensweise entspricht hier dem in der US 6,597,076 B2 offenbarten.

Die WO 2004/073283 A2 offenbart eine induktive Spulenanordnung mit einer Vielzahl von Spulen, die in getrennten Richtungen angeordnet sind, um eine effiziente induktive Leistungskopplung oder Kommunikationskopplung oder beides mit einem Gerät vorzusehen, wenn das Gerät in unterschiedlichen Richtungen bezüglich einer induktiven Primärspule angeordnet ist. Energie wird hierbei drahtlos von der Primärspule in einem Energieversorgungskreis zu einer Sekundärspule in einem zweiten Kreis übertragen. Der zweite Kreis ist elektrisch mit dem Gerät gekoppelt. Die unterschiedlichen Spulen sind um einen einteiligen Spulenkern herumgewickelt, der elektrische Anschlusspaare enthält zum elektrischen Verbinden einander gegenüberliegender Enden einer jeden Spule mit einer elektrischen Schaltung. Als Anwendungsbereiche sind Handys, PDAs, Notepads, digitale Musikabspieleinrichtungen und elektronische Spielkonsolen genannt. Durch die unterschiedlich angeordneten Spulen der induktiven Spulenanordnung soll das Gerät in jeder Orientierung innerhalb des Magnetfeldes ausreichend mit Energie versorgt werden können.

Die WO 2005/122686 A2 offenbart eine adaptive induktive Energieversorgung. Diese weist eine Primärspule innerhalb eines entfernt angeordneten Gerätehalters auf. Geräte, die innerhalb des entfernt angeordneten Gerätehalters angeordnet werden, können über die adaptive induktive Energieversorgungseinrichtung mit Energie versorgt werden. Kommunikationsschnittstellen sind vorgesehen, um eine Kommunikation zwischen den entfernt angeordneten Geräten und einem Datenbus innerhalb eines Fahrzeugs zu ermöglichen.

Die DE 103 04 587 A1 offenbart ein Magnetfelderzeugungssystem mit einer mindestens zweidimensionalen Wicklungsanordnung, wobei mindestens zwei im Wesentlichen orthogonal zueinander ausgerichtete Wicklungen vorgesehen sind, an denen Einspeiseschaltungen über Wicklungsanschlussleitungen angeschlossen sind. Ferner ist zumindest eine Wicklungsanschlussleitung einer jeden Wicklung an ein Kopplungselement angeschlossen, das die mechanisch bedingten Abweichungen von einer idealen kopplungsfreien Anordnung auf elektronische bzw. elektrische Art und Weise kompensiert. Als Kopplungselement wird insbesondere ein Sättigungstransformator offenbart, wobei die Wicklungsanschlussleitungen der Wicklungen mit Wicklungen eines Transformators verbunden sind. Ferner ist als Kopplungselement eine stufenlos oder in Stufen einstellbare Kapazität offenbart, wobei der Kapazitätswert der einstellbaren Kapazität mittels einer Ansteuereinrichtung in Abhängigkeit einer vorzugebenden Kopplung eingestellt wird. Das Magnetfelderzeugungssystem ist insbesondere zur Verwendung bei einem System mit einer Vielzahl drahtloser Sensoren und/oder Aktuatoren offenbart, das in einer Maschine oder Anlage, wie insbesondere einem Industrieroboter, Herstellungsautomaten oder Fertigungsautomaten, installiert ist. Als Sensoren bzw. Aktuatoren sind Näherungsschalter, Näherungssensoren, Temperaturmesssensoren, Druck-, Strom- und Spannungsmesssensoren sowie mikromechanische, piezoelektrische, elektrochemische, magnetostriktive, elektrostatische und elektromagnetische Aktuatoren genannt.

Die DE 197 05 301 C1 offenbart eine Einrichtung zur berührungslosen Informations- und Energieübertragung für drahtlos arbeitende Datenspeicher, die keine eigene Stromversorgung haben. Es ist eine stromversorgte Steuereinheit in Form einer Datenleseeinrichtung vorgesehen, wobei kapazitive Koppelelemente vorhanden sind und eine Datenübertragung bei gleichzeitiger nicht unterbrochener Energieübertragung ausgeführt wird. Es ist hierbei ein Schwingkreis vorgesehen, der die Energie für den Datenspeicher erzeugt. Die Energieübertragung vom Schwingkreis zum Datenspeicher erfolgt über induktive Koppelelemente. Die Datenleseeinrichtung ist mit Kondensatorplatten versehen, die mit zugehörigen Kondensatorplatten des Datenspeichers korrespondieren, wobei sowohl Daten gelesen als auch eingeschrieben werden können. Der Schwingkreis ist als Serienschwingkreis ausgebildet. Hierbei wird ein entsprechender Strom induziert, der sich so lange aufschaukelt, bis die Verluste so groß sind, dass der Strom im Betrag nicht mehr steigen kann. Sind die zugeführte Energie und die Verluste konstant, also die Energiebilanz ausgeglichen, wird auf der Sendeseite die notwendige Energie entzogen. Über eine vorgesehene Logikeinheit wird ein FET-Transistor angesteuert, der eine zusätzliche Kapazität eines Kondensators zu der bereits vorhandenen Kapazität des Schwingkreises hinzuschaltet. Der Schwingkreis wird durch das induktive Koppelelement und die Kondensatoren gebildet. Die von dem induktiven Koppelelement übertragene Energie wird von dem induktiven Koppelelement des Datenspeichers empfangen. Zwischen dem Serienschwingkreis und der Datenleseeinrichtung ist ferner ein Phasenschieber geschaltet, der durch die Logikeinheit gesteuert wird und für einen automatischen Ausgleich bei nicht fehlerfreier Datenauslesung sorgt.

Die EP 1 186 087 B1 offenbart ein System für eine eine Vielzahl von Näherungssensoren aufweisende Maschine, wobei jeder Näherungssensor mindestens eine zur Energieaufnahme aus einem mittelfrequenten Magnetfeld geeignete Sekundärwicklung aufweist. Zur drahtlosen Versorgung der Näherungssensoren mit elektrischer Energie ist ferner zumindest eine von einem mittelfrequenten Oszillator gespeiste Primärwicklung vorgesehen. Ferner ist jeder Näherungssensor mit einer Sendeeinrichtung versehen, die interessierende Sensorinformationen beinhaltende Funksignale an eine zentrale mit einem Prozessrechner der Maschine verbundene Empfangseinrichtung abgibt.

Dieser Stand der Technik offenbart nicht die Verwendung einer drahtlosen Versorgung von Geräten in einem Schaltschrank, einer Verteilereinheit oder einem Installationsgehäuse. Aufgrund des komplexen Aufbaus der Vorrichtungen des Standes der Technik ergäbe sich keine für eine Anwendung in einem Schaltschrank, einer Verteilereinheit oder einem Installationsgehäuse geeignete Anwendung, da die Kosten für solche Aufbauten viel zu hoch wären.

Aus der US 2002/0021226 A1 ist nun ein elektrisches Gerät bekannt, das elektrische Komponenten und eine Überwachungseinrichtung zumindest einer der elektrischen Komponenten umfasst. Insbesondere ist eine elektromagnetische Empfangseinrichtung in einer Seitenwand oder einer Rückwand des elektrischen Gerätes vorgesehen. Elektromagnetische Sendeeinrichtungen können zumindest eine Induktionsspule auf der Vorderseite eines Trägers enthalten, wobei der Träger, insbesondere eine Trägerschiene, u.a. aus einem magnetischen Material bestehend offenbart ist, um die magnetischen Feldlinien zu konzentrieren. Drei Träger weisen beispielsweise jeweils eine einzige Sendespule auf. Die drei Sendespulen können seriell geschaltet und an eine Verarbeitungseinheit angeschlossen sein. Alternativ kann jede der drei Sendespulen über jeweils eine Verarbeitungseinheit mit einer Zentraleinheit verbunden sein.

DE 198 82 578 B4 betrifft eine Sicherheitsvorrichtung zur Verwendung in einem Kraftfahrzeug, in der Energie einem Fahrzeugsitz zugeleitet wird. Der Sitz ist auf einem Schlitten angebracht. Der Schlitten weist herabhängende Elemente auf, die mit am Boden eines Kraftfahrzeuges angebrachten Schienen zusammenarbeiten, so dass sich der Sitz entlang der Schienen nach hinten und nach vorn schieben lassen kann. In einer der Schienen ist eine Vielzahl von Sendeantennen angebracht, die von Spulen gebildet werden. Am den Sitz tragenden Schlitten ist wenigstens eine Empfangsantenne angebracht, die von einer Spule gebildet wird.

Der vorliegenden Erfindung liegt daher die Aufgabe zugrunde, die in einem Schaltschrank oder einem Installationsgehäuse eingesetzten Geräte mit der erforderlichen Hilfsenergie zu versorgen, wobei die Energieversorgung einfach, kostengünstig und gezielt an bestimmten Stellen möglich sein soll.

Die Aufgabe wird mit dem Gegenstand des Patentanspruchs 1 gelöst. Weiterbildungen und Ausgestaltungen sind in den abhängigen Ansprüchen definiert.

In einer Ausführungsform ist für eine Anordnung zum Versorgen zumindest eines Gerätes in einem Schaltschrank, einer Verteilereinheit oder einem Installationsgehäuse mit Hilfsenergie zumindest ein Grundelement in dem oder des Schaltschranks, der Verteilereinheit, des Installationsgehäuses vorgesehen, das mit der zumindest einen mit einer Versorgungsspannung versorgbaren oder versorgten Sendespule versehen ist, wobei das Grundelement zur Aufnahme mehrerer Sendespulen modular so aufgebaut ist, dass eine selektive Energieversorgung in den einzelnen Modulen vorgesehen oder vorsehbar ist.

Dadurch wird eine Anordnung zum Versorgen zumindest eines Gerätes in einem Schaltschrank, einer Verteilereinheit oder einem Installationsgehäuse mit Hilfsenergie vorgesehen, die für die Versorgung des Gerätes mit Hilfsenergie das Prinzip von durch Resonanz gekoppelten Spulen für die Versorgung des Gerätes mit Hilfsenergie nutzt. Gerade in Schaltschränken, Verteilereinheiten und Installationsgehäusen sind zahlreiche Komponenten, Geräte und insbesondere auch Verkabelungen enthalten, so dass es sich als vorteilhaft erweist, dass durch das Vorsehen der resonanzgekoppelten Sende- und Empfangsspulen für die Hilfsenergieversorgung eines Gerätes im Schaltschrank bzw. der Verteilereinheit bzw. dem Installationsgehäuse keine weitere Verkabelung erforderlich ist. Die für die Versorgung des Gerätes mit Hilfsenergie aufzuwendenden Kosten können durch das Vorsehen der Kombination aus Sende- und Empfangsspule für die Hilfsenergiezufuhr sehr gering gehalten werden. Die Sendespule wird mit Versorgungsspannung versorgt, wodurch sie in Schwingung versetzt wird. Die Empfangsspule ist in einem solchen Abstand zur Sendespule angeordnet, dass in die Empfangsspule ein Strom induziert wird. Für eine möglichst effiziente Energieübertragung sind vorteilhaft der die Sendespule enthaltende Stromkreis und der die Empfangsspule enthaltende Stromkreis aufeinander abgestimmt, wobei eine optimale Energieübertragung zwischen der Sendespule und der Empfangsspule im Resonanzfall erfolgt. Durch das Anordnen der zumindest einen Sendespule in oder an dem Schaltschrank bzw. der Verteilereinheit bzw. dem Installationsgehäuse wird ein platzsparender Aufbau ermöglicht. Ferner ist keine weitere Energiequelle für das zu speisende Gerät erforderlich. Ebenso müssen keine weiteren Anschlussklemmen in solchen Einrichtungen, wie einem Schaltschrank, einer Verteilereinheit bzw. einem Installationsgehäuse, für das zu versorgende Gerät vorgesehen werden. Die Versorgung der Geräte mit Hilfsenergie wird somit deutlich vereinfacht. Die gezielt lediglich an einzelnen Stellen erfolgende Energieübertragung durch die jeweilige bzw. jeweiligen Sendespulen und damit eine gezielte Anregung einer Empfangsspule oder von Empfangsspulen in dem zu versorgenden Gerät erweist sich als sehr vorteilhaft - also eine selektive Energieübertragung an nur bestimmten Stellen unter Ansteuern einzelner Sendespulen durch die Modulationseinrichtung und Versorgen mit einer entsprechend aufmodulierten Versorgungsspannung. Auch aus der US 2002/0021226 A1 geht das Vorsehen von mehr als einer Spule, wobei die Sendespulen jeweils gezielt zur Energieversorgung eines Gerätes genutzt werden können, nicht hervor. Der modulare Aufbau des Grundelements ermöglicht eine selektive Energieübertragung an nur bestimmten Stellen des Grundelements.

Vorteilhaft ist bei der Anordnung zumindest ein Grundelement in dem oder des Schaltschranks, der Verteilereinheit, des Installationsgehäuses vorgesehen, das mit der zumindest einen mit der Versorgungsspannung versorgbaren oder versorgten Sendespule versehen ist. Besonders vorteilhaft ist das Grundelement eine Grundplatte in dem oder des Schaltschranks, der Verteilereinheit, des Installationsgehäuses. Die Sendespule(n) kann/können dabei in das Grundelement, insbesondere die Grundplatte, integriert sein. Ferner ist es möglich, dass die ein oder mehreren Sendespulen auf das Grundelement, insbesondere die Grundplatte, aufzubringen. Auch eine Kombination beider Ausbildungen des Grundelements ist möglich. Die zumindest eine Sendespule kann somit flach auf das Grundelement aufgebracht und zugleich teilweise in dieses integriert sein. Es ist somit kein weiteres Vorsehen eines Spulenkerns erforderlich. Vielmehr reicht das Vorsehen des zumindest einen Grundelements insbesondere in Ausbildung als Grundplatte bereits aus. Dieses Grundelement kann beispielsweise eine Außenwandung des Schaltschranks bzw. der Verteilereinheit bzw. des Installationsgehäuses sein. Grundsätzlich ist es ebenfalls möglich, eine Innenwandung des Schaltschranks, der Verteilereinheit, des Installationsgehäuses als Grundelement mit der zumindest einen Sendespule zu versehen.

Das Grundelement kann nicht nur eine Grundplatte, sondern auch eine Befestigungseinrichtung für das oder des Geräts in oder an dem Schaltschrank, der Verteilereinheit bzw. dem Installationsgehäuse sein. Insbesondere kann eine solche Befestigungseinrichtung eine Tragschiene für das Gerät sein, wobei die zumindest eine Sendespule in eine solche Tragschiene bzw. Befestigungseinrichtung für das Gerät / des Geräts, das mit Hilfsenergie versorgt werden soll, integriert sein kann. Ferner kann die zumindest eine Sendespule auf eine solche Befestigungseinrichtung, insbesondere Tragschiene, aufgebracht sein bzw. werden. Durch das Anordnen in der zumindest einen Sendespule in oder an der Befestigungseinrichtung für das Gerät ist sichergestellt, dass die zumindest eine Sendespule nahe an dem Gerät angeordnet ist, so dass eine optimale Übertragung von Energie von der Sendespule auf die Empfangsspule sichergestellt werden kann.

Vorteilhaft ist die zumindest eine Empfangsspule in das Gerät integriert. Anstelle nur einer Empfangsspule kann auch eine Empfangseinheit, also eine Kombination aus zumindest einer Empfangsspule und weiteren elektronischen Einrichtungen zur Energieübertragung an das Gerät, in diesem vorgesehen sein.

Vorteilhaft ist zumindest eine Versorgungseinrichtung für das Gerät vorgesehen und die Empfangsspule mit der Versorgungseinrichtung verbindbar oder verbunden. Die Versorgungseinrichtung ist vorteilhaft ebenfalls in dem Gerät angeordnet. Die Empfangsspule kann insbesondere im Bereich einer Außenwandung des Gerätes angeordnet sein, um möglichst nahe an der zumindest einen Sendespule im oder am Grundelement in dem bzw. des Schaltschranks/ der Verteilereinheit/ des Installationsgehäuses angeordnet werden zu können. Die zumindest eine Empfangsspule kann in oder an einer solchen Außenwandung des Gerätes angeordnet werden, die benachbart zu dem Grundelement insbesondere mit geringem Abstand zu diesem anordbar ist.

Vorteilhaft ist zumindest eine Modulationseinrichtung zum Modulieren der Versorgungsspannung der Sendespule vorgesehen, insbesondere dieser vorgeschaltet. Die Modulationseinrichtung erhöht vorzugsweise die Frequenz der an die Sendespule aussendbaren oder ausgesandten Versorgungsspannung gegenüber der Versorgungsspannung vor der Modulationseinrichtung. Aufgrund der höheren Frequenz ist eine bessere Übertragung der Hilfsenergie möglich bzw. kann durch diese höherfrequenten Schwingungen, die von der zumindest einen Sendespule ausgesandt werden, in der zumindest einen Empfangsspule ein höherer Strom induziert werden. Vorteilhaft ist die zumindest eine Modulationseinrichtung ebenfalls auf dem Grundelement angeordnet oder zumindest nahe an diesem, um möglichst kurze Wege zwischen der Modulationseinrichtung und der Sendespule vorzusehen. Eine Verkabelung zwischen der Modulationseinrichtung und der Sendespule kann völlig entfallen, wenn die Modulationseinrichtung auf der Grundplatte selbst angeordnet und beispielsweise auf der Rückseite der Grundplatte eine Leitung als geätzte Leitung zur Einspeisestelle der zumindest einen Sendespule geführt ist. Bei Vorsehen mehrerer Sendespulen auf dem zumindest einen Grundelement kann eine wahlweise Modulation der Versorgungsspannung für jede einzelne der Sendespulen vorgesehen werden. Es ist somit möglich, jede einzelne Sendespule mit einer unterschiedlichen Frequenz der modulierten Versorgungsspannung zu beaufschlagen, so dass selektiv die jeweils an einer bestimmten Stelle erforderliche Energie auf eine entsprechende Empfangsspule übertragen werden kann.

Das Grundelement ist zur Aufnahme mehrerer Sendespulen modular so aufzubauen, dass eine selektive Energieversorgung in den einzelnen Modulen vorgesehen oder vorsehbar ist. Hierbei kann insbesondere lediglich an den Stellen eine Sendespule in oder an dem Grundelement vorgesehen werden, an denen tatsächlich auf der Empfangsseite Energie benötigt wird. Alternativ kann eine Anzahl von Sendespulen auf oder in dem Grundelement vorgesehen werden und über die Modulationseinrichtung bzw. eine gegebenenfalls ebenfalls vorgesehene zusätzliche Ansteuerungseinrichtung lediglich ein Teil der Sendespulen mit modulierter Versorgungsspannung versorgt werden, um selektiv ein Einspeisen von Hilfsenergie in die jeweiligen Empfangsspulen auf Seiten des zu speisenden Gerätes zu ermöglichen.

Vorteilhaft ist zumindest eine Anschlusseinrichtung für die zumindest eine Sendespule in dem Grundelement vorgesehen. Wie bereits erwähnt, kann insbesondere auf der Rückseite der Grundplatte eine solche Anschlusseinrichtung vorgesehen sein. Grundsätzlich ist es jedoch ebenfalls möglich, auf der Vorderseite der Grundplatte, auf der auch die zumindest eine Sendespule angeordnet ist oder in die auch die zumindest eine Sendespule integriert ist, eine solche Anschlusseinrichtung vorzusehen.

Das Grundelement für einen Schaltschrank bzw. für eine elektrische Verteilereinheit, ein Installationsgehäuse, das mit der Anordnung zum Versorgen zumindest eines Gerätes in dem Schaltschrank, der Verteilereinheit bzw. dem Installationsgehäuse mit Hilfsenergie versehen werden soll, ist somit vorteilhaft mit zumindest einer Sendespule und mit zumindest einem Anschluss für diese versehen, wobei das Grundelement zur Aufnahme einer Mehrzahl von Sendespulen modular aufgebaut ist. Die zumindest eine Sendespule kann in das Grundelement integriert und/oder auf dieses aufgebracht sein, wobei für die Integration in das Grundelement ein Ätzen von Windungen der zumindest einen Sendespule oder auch das Vorsehen von Ausnehmungen möglich ist, in die Drahtspulen eingelegt werden können. Sofern das Grundelement aus einem gießfähigen Material besteht, können die Sendespulen insbesondere auch durch Eingießen bereits bei der Fertigung des Grundelementes in dieses integriert werden. Ferner ist ein Aufbringen der zumindest einen Sendespule auf das Grundelement und Befestigen auf dessen Oberfläche beispielsweise unter Verkleben mit einem entsprechenden Harz oder auch ein Aufbringen unter anderweitigem Verbinden mit dem Grundelement möglich.

Die Sendespule und/oder die Empfangsspule können ebenfalls zur Datenübertragung verwendet werden. Somit kann über diese Spulen nicht nur Energie zum Versorgen des Geräts mit Hilfsenergie übertragen werden, sondern auch Daten. Grundsätzlich kann auch nur eine Datenübertragung über diese Spulen erfolgen, also ohne die Übertragung von Energie. Vorteilhaft ist zumindest eine Einrichtung zum Einspeisen von Daten in die Sendespule und/oder zumindest eine Einrichtung zum Verarbeiten von durch die Empfangseinrichtung empfangenen Daten vorgesehen. Als besonders vorteilhaft erweist es sich hierbei, wenn die Einrichtung zum Einspeisen von Daten in die Sendespule im Bereich des oder auf dem Grundelement und/oder die Einrichtung zum Verarbeiten der durch die Empfangsspule empfangenen Daten im Gerät oder im Bereich des Geräts angeordnet ist oder sind. Durch die Einrichtung zum Einspeisen von Daten können die zu übertragenden Daten ggf. in der für die Übertragung erforderlichen Weise verarbeitet und in die Sendespule eingespeist werden. Die Einrichtung zum Verarbeiten der empfangenen Daten kann die empfangenen Daten in der für das Gerät erforderlichen Weise verarbeiten und diesem zur Verfügung stellen. Grundsätzlich können auch Daten über die Sende- und Empfangsspule übertragen werden, die andere Einrichtungen im Schaltschrank, in der elektrischen Verteilereinheit, in dem Installationsgehäuse betreffen, wobei eine entsprechende Verarbeitung und Zur-Verfügung-Stellung der Daten für solche Einrichtungen auf der Empfangsseite erfolgen kann, also im Schaltschrank, in der Verteilereinheit bzw. dem Installationsgehäuse.

Ein Gerät, das in oder an einem Schaltschrank oder einer Verteilereinheit oder einem Installationsgehäuse angeordnet werden soll, weist vorteilhaft zumindest eine Empfangsspule zum Empfangen der von einer Sendespule in dem Schaltschrank, der Verteilereinheit, dem Installationsgehäuse ausgesandten Energie zum Versorgen des Geräts mit Hilfsenergie auf.

Die Aufgabe wird auch durch einen Schaltschrank mit zumindest einem mit einer Hilfsenergie versorgbaren Gerät gelöst, der mit einer Anordnung zum Versorgen des Geräts mit Hilfsenergie, wie sie vorstehend beschrieben ist, versehen ist. Auch wird die Aufgabe für eine elektrische Verteilereinheit mit zumindest einem mit einer Hilfsenergie versorgbaren Gerät gelöst, bei der eine Anordnung zum Versorgen des Geräts mit Hilfsenergie entsprechend den vorstehenden Ausführungen vorgesehen ist. Die Aufgabe wird ferner für ein Installationsgehäuse mit zumindest einem mit einer Hilfsenergie versorgbaren Gerät gelöst, bei dem eine Anordnung zum Versorgen des Geräts mit Hilfsenergie entsprechend den vorstehenden Ausführungen vorgesehen ist.

Zur näheren Erläuterung der Erfindung werden im Folgenden Ausführungsbeispiele von dieser näher anhand der Zeichnungen beschrieben. Diese zeigen in:
- Figur 1: eine Seitenansicht eines prinzipiellen Aufbaus einer erfindungsgemäßen Anordnung zum Versorgen eines Geräts mit Hilfsenergie, wobei eine Sendespule in einem Grundelement und eine Empfangsspule in dem Gerät vorgesehen sind,
- Figur 2: eine Draufsicht auf ein erfindungsgemäßes Grundelement für einen Schaltschrank oder eine elektrische Verteilereinheit oder ein Installationsgehäuse als Prinzipskizze, und
- Figur 3: eine Draufsicht auf eine alternative Ausführungsform eines erfindungsgemäßen Grundelements für einen Schaltschrank oder eine elektrische Verteilereinheit oder ein Installationsgehäuse.

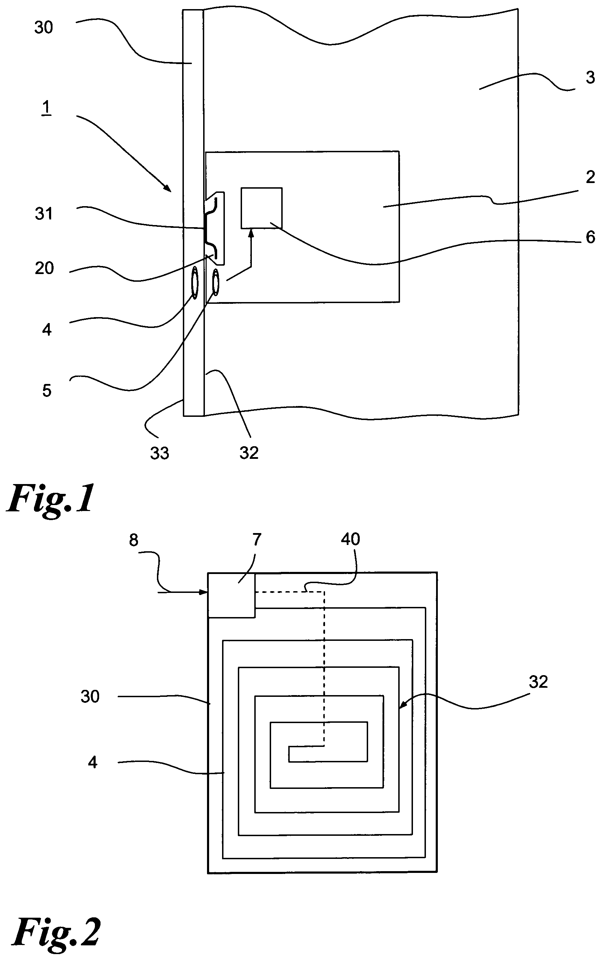

Figur 1 zeigt eine Prinzipskizze einer Anordnung 1 zum Versorgen eines Gerätes 2 in einem Schaltschrank 3 mit einer Hilfsenergie. Der Schaltschrank 3 ist dabei lediglich angedeutet, wobei insbesondere eine Wandung 30 von diesem als Grundplatte dargestellt ist. An dieser Wandung 30 ist eine Tragschiene 31 angeordnet, an der das Gerät 2 befestigt ist. Zu diesem Zweck weist das Gerät 2 eine entsprechende Ausnehmung 20 auf, die die Tragschiene übergreift. Das Gerät 2 ist hierüber an der Wandung 30 gehalten.

Die Wandung 30 umfasst eine Sendespule 4 und das Gerät 2 umfasst eine Empfangsspule 5. Nach dem Anordnen des Gerätes 2 an der Wandung 30 des Schaltschranks 3 sind Sende- und Empfangsspule 4, 5 dicht benachbart zueinander angeordnet. Wird die Sendespule 4 mit einer Versorgungsspannung beaufschlagt, wie näher zu Figur 2 weiter unten beschrieben werden wird, wird sie zur Schwingung angeregt. Die Sendespule 4 kann hierdurch in der Empfangsspule 5 einen Strom induzieren, der als Hilfsenergie dem Gerät 2 zur Verfügung steht.

Wie Figur 1 weiter entnommen werden kann, umfasst das Gerät 2 außer der Empfangsspule 5 eine Versorgungseinrichtung 6, die die von der Empfangsspule empfangene Energie in Form eines induzierten Stroms in die für das Gerät erforderliche Form aufbereitet. Die Versorgungseinrichtung 6 ist in Figur 1 lediglich angedeutet. Sie kann anwendungsspezifisch unterschiedlich ausgebildet werden. Vorteilhaft ist sie ebenso wie die Empfangsspule 5 innerhalb des Gerätes 2 angeordnet, um eine optimale Energieversorgung für das Gerät sicherzustellen.

Wie bereits erwähnt, wird die Sendespule 4 mit Versorgungsspannung gespeist, wie insbesondere besser der Figur 2 entnommen werden kann. In Figur 2 ist eine Draufsicht auf die Wandung 30 des Schaltschranks 3 gezeigt, wobei im Unterschied zur Ausführung in Figur 1 sich die Sendespule 4 in Figur 2 über die gesamte Wandung 30 hinweg erstreckt. Sie ist somit großflächig auf der Wandung 30 angeordnet.

Wie der Figur 2 weiter entnommen werden kann, ist eine Modulationseinrichtung 7 auf der Wandung 30 vorgesehen, die zum Modulieren der Versorgungsspannung 8 dient. Die der Modulationseinrichtung 7 zugeführte Versorgungsspannung ist lediglich durch den in Figur 2 gezeigten Pfeil angedeutet. Die Frequenz der Versorgungsspannung 8 wird durch die Modulationseinrichtung angehoben, so dass die Sendespule 4 mit einer im Vergleich zur Versorgungsspannung höherfrequenten Spannung versorgt wird. Entsprechend Figur 2 ist die Modulationseinrichtung direkt mit der äußersten Windung der Sendespule verbunden. Die innerste Windung der Antennenspule ist über eine auf der Rückseite 33 (siehe Figur 1) der Wandung 30 geführte Leitung 40 ebenfalls mit der Modulationseinrichtung 7 verbunden. Grundsätzlich kann die Rückleitung 40 zur Modulationseinrichtung auch auf der Vorderseite 32 (siehe auch Figur 1) der Wandung 30 geführt werden, sofern die Rückleitung gegenüber den Windungen der Sendespule 4 isoliert ist.

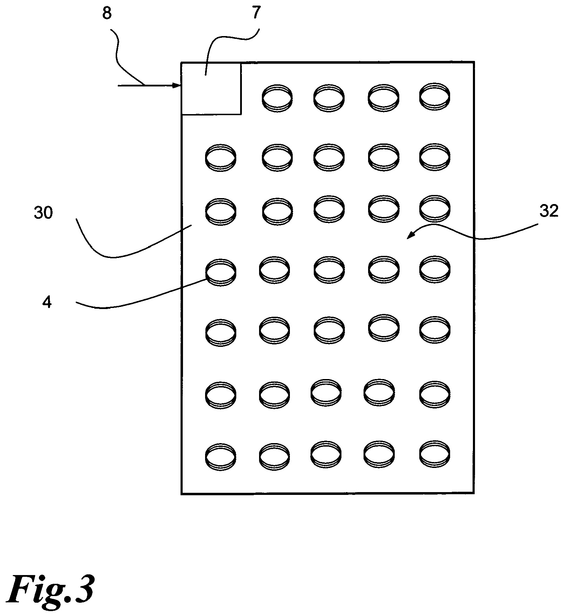

Anstelle des Vorsehens einer großflächigen Sendespule können auch mehrere kleinere Sendespulen auf der Wandung 30 vorgesehen werden, wie dies beispielsweise in der Draufsicht auf die Wandung 30 in Figur 3 gezeigt ist. Auch hier ist wiederum die Modulationseinrichtung 7 in eine Ecke der Wandung 30 positioniert dargestellt. Die Modulationseinrichtung wird wiederum mit der Versorgungsspannung 8 gespeist. Selbstverständlich könnte die Modulationseinrichtung auch an einer anderen Stelle der Wandung positioniert werden und auch die Zuführung der Versorgungsspannung an einer anderen Stelle erfolgen.

Die Wandung umfasst 34 einzelne Sendespulen, die mit der Modulationseinrichtung 7 in Verbindung stehen. Die jeweiligen Leitungen zu den Sendespulen 4 sind hier in die Wandung 30 integriert und daher in Figur 3 nicht gezeigt. Die Modulationseinrichtung 7 kann die einzelnen Sendespulen einzeln und getrennt voneinander ansteuern und mit der entsprechenden aufmodulierten Versorgungsspannung versorgen. Hierdurch ist es möglich, nur gezielt an einzelnen Stellen Energie durch die jeweilige(n) Sendespule(n) auszusenden, an denen eine Anregung einer Empfangsspule oder Empfangsspulen in dem Gerät 2, das in der Nähe der Wandung angeordnet ist, benötigt wird und somit erfolgen soll. Es ist also eine selektive Energieübertragung nur an diesen Stellen möglich. Zudem können auch mehrere Geräte auf der Vorderseite 33 der Wandung, gegebenenfalls jedoch auch auf der Rückseite 32 von dieser, angeordnet werden, wobei dann jeweils diejenige Sendespule(n) 4 angesteuert bzw. mit Versorgungsspannung versorgt wird/werden, die benachbart zu einer Empfangsspule in einem jeweiligen Gerät liegt/liegen. Die Wandung 30 als Grundplatte kann für die Versorgung eines oder mehrerer Geräte 2 mit einer Hilfsenergie somit modular aufgebaut sein, so dass nur dort durch die jeweilige Sendespule Energie in die Empfangsspule übertragen wird, wo diese tatsächlich benötigt wird.

Anstelle des Vorsehens der einen oder mehreren Sendespulen 4 in der Wandung 30 oder zusätzlich dazu kann zumindest eine Sendespule in oder an der Tragschiene 31 vorgesehen sein, an der das Gerät 2 befestigt ist.

Außer der Verwendung der Anordnung zur Versorgung des Gerätes 2 mit Hilfsenergie in einem Schaltschrank kann diese natürlich auch beispielsweise in einer Verteilereinheit oder in einem Installationsgehäuse vorgesehen werden. Die Anordnung der zumindest einen Sendespule 4 erfolgt dort in entsprechender Weise in oder auf einer Wandung dort bzw. in oder auf einer dort vorgesehenen Befestigungseinrichtung für das entsprechende Gerät 2.

Neben den im Vorstehenden genannten und in den Zeichnungen dargestellten Ausführungsformen von Anordnungen zum Versorgen eines Gerätes mit Hilfsenergie in einem Schaltschrank, einer Verteilereinheit oder einem Installationsgehäuse können noch zahlreiche weitere gebildet werden, bei denen jeweils eine oder mehrere Sendespulen zum Aussenden einer von einer Versorgungsspannung in die Sendespule eingebrachten Energie und zumindest eine Empfangsspule zum Empfangen der Hilfsenergie bei dem entsprechenden Gerät vorgesehen sind. Neben der Verwendung in einem Schaltschrank, einer elektrischen Verteilereinheit und einem Installationsgehäuse kann eine solche Anordnung auch in wesensgleichen elektrischen Aufbauten und Anlagen Anwendung finden, insbesondere auch, wenn die Spulen zur Datenübertragung verwendet werden.

### Bezugszeichenliste

- 1: Anordnung
- 2: Gerät
- 3: Schaltschrank
- 4: Sendespule
- 5: Empfangsspule
- 6: Versorgungseinrichtung
- 7: Modulationseinrichtung
- 8: Versorgungsspannung
- 20: Ausnehmung
- 30: Wandung (Grundplatte)
- 31: Tragschiene
- 32: Vorderseite der Wandung
- 33: Rückseite der Wandung
- 40: Rückleitung

## Patentansprüche

1. Anordnung (1) zum Versorgen zumindest eines Gerätes (2) in einem Schaltschrank (3) oder einem Installationsgehäuse mit Hilfsenergie, wobei zumindest eine mit einer Versorgungsspannung (8) versorgbare oder versorgte Sendespule (4) zum Aussenden von Hilfsenergie und zumindest eine Empfangsspule (5) zum Empfangen der Hilfsenergie vorgesehen und die zumindest eine Sendespule (4) in oder an dem Schaltschrank (3) oder dem Installationsgehäuse angeordnet ist sowie
zumindest ein Grundelement (30, 31) in dem oder des Schaltschranks (3) oder des Installationsgehäuses vorgesehen ist, das mit der zumindest einen mit einer Versorgungsspannung (8) versorgbaren oder versorgten Sendespule (4) versehen ist,
wobei das Grundelement (30, 31) zur Aufnahme mehrerer Sendespulen (4) modular so aufgebaut ist, dass eine selektive Energieversorgung in den einzelnen Modulen durch Ansteuern einzelner, in das Grundelement (30, 31) integrierter Sendespulen, und damit eine gezielte Anregung einer Empfangsspule oder von Empfangsspulen in dem zu versorgenden Gerät, vorgesehen ist, und
das Grundelement eine Grundplatte (30) in dem oder des Schaltschranks (3) oder des Installationsgehäuses oder eine Befestigungseinrichtung, welche eine Tragschiene (31) für das Gerät (2) ist, in oder an dem Schaltschrank (3) oder dem Installationsgehäuse ist.

2. Anordnung (1) nach Anspruch 1,
**dadurch gekennzeichnet, dass**
die Empfangsspule (5) in das Gerät (2) integriert ist.

3. Anordnung (1) nach einem der vorstehenden Ansprüche,
**dadurch gekennzeichnet, dass**
zumindest eine Versorgungseinrichtung (6) für das Gerät (2) vorgesehen und die Empfangsspule (5) mit der Versorgungseinrichtung (6) verbindbar oder verbunden ist.

4. Anordnung (1) nach einem der Ansprüche 1 bis 3,
**dadurch gekennzeichnet, dass**
zumindest eine Anschlusseinrichtung für die zumindest eine Sendespule (4) in dem Grundelement (30, 31) vorgesehen ist.

5. Anordnung (1) nach einem der Ansprüche 1 bis 4,
**dadurch gekennzeichnet, dass**
die Sendespule (4) und/oder die Empfangsspule (5) zur Datenübertragung verwendbar sind.

6. Anordnung (1) nach Anspruch 5,
**dadurch gekennzeichnet, dass**
zumindest eine Einrichtung zum Einspeisen von Daten in die Sendespule (4) und/oder zumindest eine Einrichtung zum Verarbeiten von durch die Empfangsspule (5) empfangenen Daten vorgesehen ist.

7. Anordnung (1) nach Anspruch 6,
**dadurch gekennzeichnet, dass**
die Einrichtung zum Einspeisen von Daten in die Sendespule (4) im Bereich des oder auf dem Grundelement (30, 31) und/oder die Einrichtung zum Verarbeiten der durch die Empfangsspule (5) empfangenen Daten im Gerät (2) oder im Bereich des Geräts (2) angeordnet ist oder sind.

## Claims

1. Arrangement (1) for supplying at least one device (2) in a control panel (3) or an installation housing with auxiliary power, wherein at least one transmitting coil (4) suppliable or supplied with supply voltage (8) is provided for transmitting auxiliary power, and at least one receiving coil (5) is provided for receiving the auxiliary power, and the at least one transmitting coil (4) is disposed in or on the control panel (3) or the installation housing and
at least one base element (30, 31) is provided in or of the control panel (3) or of the installation housing, which is provided with the at least one transmitting coil (4) suppliable or supplied with a supply voltage (8),
wherein the base element (30, 31) is designed to be modular for accommodating multiple transmitting coils (4) so that a selective power supply is provided in the individual modules by controlling individual transmitting coils integrated into the base element (30, 31), and thereby a selective excitation of a receiving coil or receiving coils in the device to be supplied,
and the base element is a base plate (30) in or of the control panel (3) or the installation housing or a securing device, which is a support rail (31) for the device (2), in or on the control panel (3) or the installation housing.

2. Arrangement (1) according to claim 1, **characterised in that** the receiving coil (5) is integrated into the device (2).

3. Arrangement (1) according to any of the preceding claims, **characterised in that** at least one supply device (6) is provided for the device (2) and the receiving coil (5) is connectable or connected to the supply device (6).

4. Arrangement (1) according to any of claims 1 to 3, **characterised in that** at least one connection device is provided for the at least one transmitting coil (4) in the base element (30, 31).

5. Arrangement (1) according to any of claims 1 to 4, **characterised in that** the transmitting coil (4) and/or the receiving coil (5) can be used for data transmission.

6. Arrangement (1) according to claim 5, **characterised in that** at least one device is provided for feeding data into the transmitting coil (4) and/or at least one device is provided for processing data received by the receiving coil (5).

7. Arrangement (1) according to claim 6, **characterised in that** the device for feeding data into the transmitting coil (4) is arranged in the region of or on the base element (30, 31) and/or the device for processing the data received by the receiving coil (5) is arranged in the device (2) or in the region of the device (2).

## Revendications

1. Dispositif (1) d'alimentation en énergie auxiliaire d'au moins un appareil (2) dans une armoire de commande (3) ou un boîtier d'installation, dans lequel au moins une bobine d'émission (4) alimentée ou pouvant être alimentée en tension d'alimentation (8) destinée à distribuer de l'énergie auxiliaire et au moins une bobine de réception (5) destinée à recevoir l'énergie auxiliaire sont prévues et l'au moins une bobine d'émission (4) est disposée dans ou sur l'armoire de commande (3) ou le boîtier d'installation ainsi qu'au moins un élément de base (30, 31) dans la ou de l'armoire de commande (3) ou du boîtier d'installation est prévu, lequel est pourvu de l'au moins une bobine d'émission (4) alimentée ou pouvant être alimentée en tension d'alimentation (8),
dans lequel l'élément de base (30, 31) est conçu de manière modulaire pour la réception de plusieurs bobines d'émission (4) de telle manière qu'une alimentation en énergie sélective soit prévue dans les modules individuels par commande de bobines d'émission individuelles intégrées dans l'élément de base (30, 31) et ainsi une excitation ciblée d'une bobine de réception ou de bobines de réception dans l'appareil à alimenter, et l'élément de base est une plaque de base (30) dans la ou de l'armoire de commande (3) ou du boîtier d'installation ou un dispositif de fixation, lequel est un rail porteur (31) pour l'appareil (2), dans ou sur l'armoire de commande (3) ou le boîtier d'installation.

2. Dispositif (1) selon la revendication 1,
**caractérisé en ce que**
la bobine de réception (5) est intégrée dans l'appareil (2).

3. Dispositif (1) selon l'une quelconque des revendications précédentes,
**caractérisé en ce que**
au moins un dispositif d'alimentation (6) pour l'appareil (2) est prévu et la bobine de réception (5) est raccordée ou peut être raccordée au dispositif d'alimentation (6).

4. Dispositif (1) selon l'une quelconque des revendications 1 à 3,
**caractérisé en ce que**
au moins un dispositif de raccordement pour l'au moins une bobine d'émission (4) est prévu dans l'élément de base (30, 31).

5. Dispositif (1) selon l'une quelconque des revendications 1 à 4,
**caractérisé en ce que**
la bobine d'émission (4) et/ou la bobine de réception (5) peut être utilisée pour la transmission de données.

6. Dispositif (1) selon la revendication 5,
**caractérisé en ce que**
au moins un dispositif pour l'injection de données dans la bobine d'émission (4) et/ou au moins un dispositif pour le traitement de données reçues par la bobine de réception (5) est prévu.

7. Dispositif (1) selon la revendication 6,
**caractérisé en ce que**
le dispositif pour l'injection de données dans la bobine d'émission (4) est agencé dans la zone du ou sur l'élément de base (30, 31) et/ou le dispositif pour le traitement de données reçues par la bobine de réception (5) est agencé dans l'appareil (2) ou dans la zone de l'appareil (2).
